# EUROPEAN PATENT APPLICATION

(11) **EP 2 949 419 A1**
(43) Date of publication of application: **02.12.2015**
(21) Application number: 15168847.0
(22) Date of filing: 22.05.2015
(51) Int. Cl.: B23P 15/14

(54) **GEAR INCORPORATION SYSTEM AND GEAR INCORPORATION METHOD**

(30) Priority: 27.05.2014 JP 2014109066
(71) Applicant: Kabushiki Kaisha Yaskawa Denki, Kitakyushu-shi, Fukuoka 806-0004 (JP)
(72) Inventor: HIRANO, Yusuke, Kitakyushu-shi, Fukuoka 806-0004 (JP); HASHIGUCHI, Yukio, Kitakyushu-shi, Fukuoka 806-0004 (JP); SATO, Takashi, Kitakyushu-shi, Fukuoka 806-0004 (JP)
(74) Representative: Viering, Jentschura & Partner Patent- und Rechtsanwälte

(57) **Abstract**

A gear incorporation system includes a robot to hold a gear from among gears including first and second gears that are not to be engaged with each other. The robot moves and attaches the gear to an attachment position. A control apparatus controls the robot and includes a first determiner, a temporary placer, and a turner. The first determiner determines whether the gears include an intermediate gear that is to be engaged between and with the first and second gears. When the first determiner determines that the gears include the intermediate gear, the temporary placer controls the robot to give priority to the first and second gears to attach them to respective attachment positions, and then to temporarily place the intermediate gear on the attachment position. The turner controls the robot to turn one of the first and second gears by a slight amount.

## Description

### BACKGROUND

### FIELD OF THE INVENTION

The present invention relates to a gear incorporation system and a gear incorporation method.

### DISCUSSION OF THE BACKGROUND

In an attempt to enhance efficiency in production lines or other production sites, various robot systems have been proposed in which robots perform certain kinds of work that have hitherto been performed manually in production lines or other production sites.

In some of the robot systems, a robot holds an engagement part such as a gear to bring the gear into mesh with another gear, and brings the gears into full engagement with each other. Then, the robot incorporates the engaged gears into a product.

For example, Japanese Unexamined Patent Application Publication No. 2013-146844 discloses a robot, a robot controller, and a camera. The robot controller stores a template image in a storage in advance. The camera picks up images of engagement portions of gears that are engaged with each other. The robot controller controls the robot to converge the difference that each image has relative to the template image in the engagement of the gears with each other.

The contents of Japanese Unexamined Patent Application Publication No. 2013-146844 are incorporated herein by reference in their entirety.

Japanese Unexamined Patent Application Publication No. 2013-146844 has room for improvement in efficiency and readiness of gear engagement.

Specifically, Japanese Unexamined Patent Application Publication No. 2013-146844 requires repeated control of the robot until all the differences that the images of the engagement portions of the engaged gears have relative to the template image are converged. The repeated control of the robot becomes increasingly time-consuming as more gears are engaged with each other.

Additionally, Japanese Unexamined Patent Application Publication No. 2013-146844 requires that the control of the robot proceed in conjunction with the image processing of the images picked up using the camera, resulting in a tendency toward complicated processing of the entire system.

The present disclosure has been made in view of the above-described circumstances, and it is an object of the present disclosure to provide a gear incorporation system and a gear incorporation method that ensure efficiency and readiness of gear engagement.

### SUMMARY

According to one aspect of the present disclosure, a gear incorporation system includes a robot and a control apparatus. The robot is configured to hold a gear from among a plurality of gears including a first gear and a second gear that are not to be engaged with each other. The robot is configured to move the gear to a predetermined attachment position for the gear and attach the gear to the predetermined attachment position. The control apparatus is configured to control the robot and includes a first determiner, a temporary placer, and a turner. The first determiner is configured to determine whether the plurality of gears include an intermediate gear that is to be engaged between and with the first gear and the second gear. The temporary placer is configured to, when the first determiner determines that the plurality of gears include the intermediate gear, control the robot to give priority to the first gear and the second gear to attach the first gear and the second gear to respective predetermined attachment positions, and is configured to control the robot to temporarily place the intermediate gear on the predetermined attachment position after attaching the first gear and the second gear to the respective predetermined attachment positions. The turner is configured to, after the robot has temporarily placed the intermediate gear on the predetermined attachment position, control the robot to turn at least one gear among the first gear and the second gear by a slight amount.

The one aspect of the present disclosure ensures efficiency and readiness of gear engagement.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
FIG. 1A is a schematic plan view of a configuration of a gear incorporation system according to an embodiment;
FIG. 1B is a schematic plan view of an exemplary workpiece in which gears are incorporated;
FIG. 2 is a schematic perspective view of an exemplary configuration of a robot;
FIG. 3A is a schematic view of an exemplary configuration of a hand;
FIG. 3B schematically illustrates an example of how the robot attaches a gear;
FIG. 4A is a block diagram of the gear incorporation system according to the embodiment;
FIG. 4B is a block diagram of a configuration of an instructor;
FIG. 5A is a diagram schematically illustrating a first aspect of a procedure for a gear incorporation operation;
FIG. 5B is a diagram schematically illustrating a second aspect of the procedure for the gear incorporation operation;
FIG. 5C is a diagram schematically illustrating a third aspect of the procedure for the gear incorporation operation;
FIG. 5D is a diagram schematically illustrating a fourth aspect of the procedure for the gear incorporation operation;
FIG. 5E is a diagram schematically illustrating a fifth aspect of the procedure for the gear incorporation operation;
FIG. 5F is a diagram schematically illustrating a sixth aspect of the procedure for the gear incorporation operation;
FIG. 5G is a diagram schematically illustrating a seventh aspect of the procedure for the gear incorporation operation;
FIG. 5H is a diagram schematically illustrating an eighth aspect of the procedure for the gear incorporation operation;
FIG. 5I is a diagram schematically illustrating a ninth aspect of the procedure for the gear incorporation operation;
FIG. 6A is a diagram schematically illustrating a first modification;
FIG. 6B is a diagram schematically illustrating a second modification;
FIG. 7 is a flowchart of a procedure for processing performed by the gear incorporation system according to the embodiment; and
FIG. 8 is a block diagram of a gear incorporation system according to another embodiment.

### DESCRIPTION OF THE EMBODIMENTS

A gear incorporation system and a gear incorporation method according to embodiments will be described in detail below by referring to the accompanying drawings. The following embodiments are provided for exemplary purposes only and are not intended to limit the present disclosure.

For the sake of description, the following gear incorporation system is a robot system dedicated to a step of incorporating a plurality of gears into a to-be-processed material (workpiece). The step may be an exemplary part of a process by which a product is produced.

The gear incorporation system includes a robot, and the robot includes a robot arm. The robot arm may occasionally be referred to simply as "arm". To the distal end of the "arm" of the robot, an end effector is attached. The end effector may occasionally be referred to as "hand".

The plurality of gears may be collectively referred to with the symbol "G", and where necessary, individually referred to with numbers added to the symbol "G", such as "G1", "G2", and so forth.

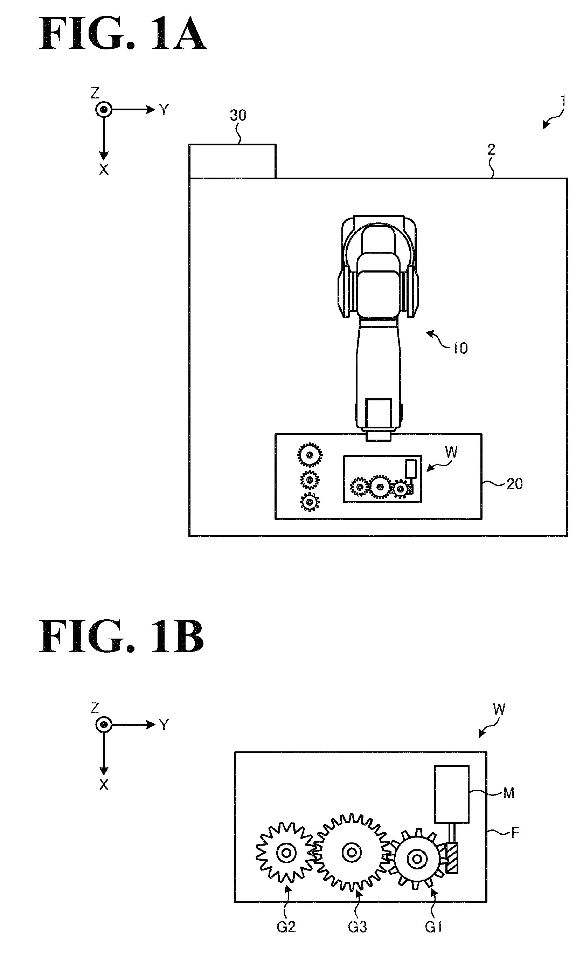

FIG. 1A is a schematic plan view of a configuration of a gear incorporation system 1 according to this embodiment. For the ease of description, FIG. 1A illustrates a three-dimensional orthogonal coordinate system including a Z axis with its vertically upward direction being assumed the positive direction. This orthogonal coordinate system may also be illustrated in some other drawings referred to in the following description.

As illustrated in FIG. 1A, the gear incorporation system 1 includes a cell 2. The cell 2 defines a rectangular parallelepiped workspace. Inside the cell 2, the gear incorporation system 1 includes a robot 10 and a work table 20.

Outside the cell 2, the gear incorporation system 1 includes a control apparatus 30. The control apparatus 30 is coupled in an information transmittable manner to the robot 10, which is inside the cell 2.

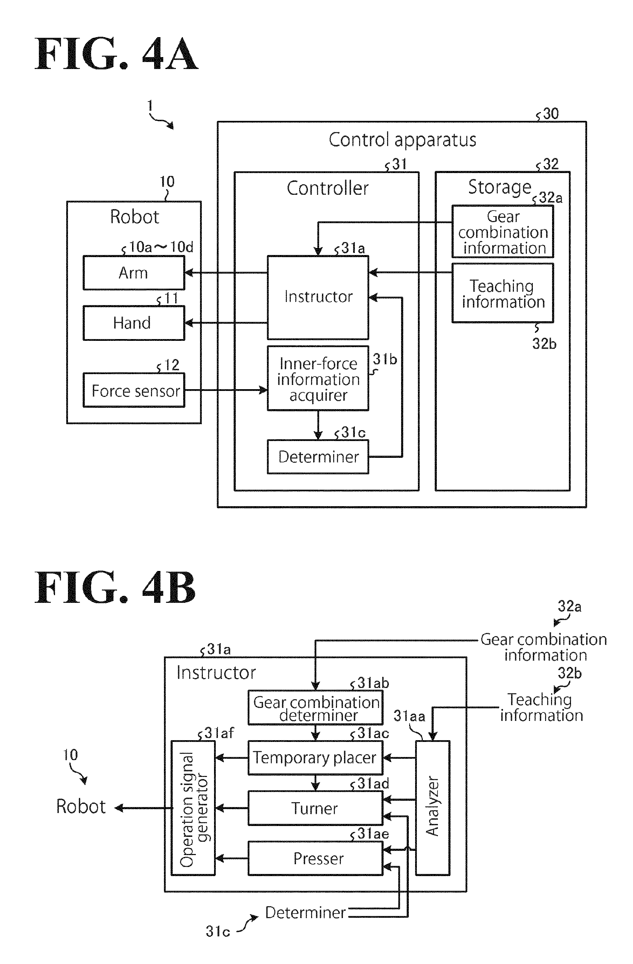

Here, the control apparatus 30 is a controller to control various operations of the robot 10, and includes various control-related devices, processing units, and a storage device. A configuration of the control apparatus 30 will be described in detail later by referring to FIGs. 4A and 4B.

While in FIG. 1A the control apparatus 30 has a single housing, this should not be construed in a limiting sense. Another possible example is that the control apparatus includes a plurality of housings respectively corresponding to the elements of the robot 10, which is the control subject. Still another possible example is that the control apparatus is disposed inside the cell 2.

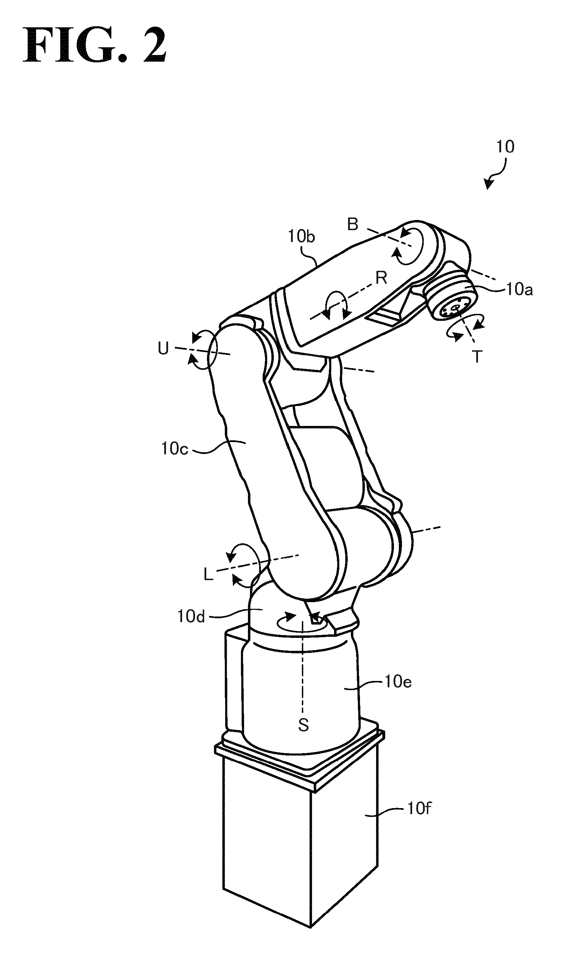

The robot 10 is a manipulator capable of operating in response to an operation instruction from the control apparatus 30. The robot 10 holds a gear G, moves the gear G to a predetermined attachment position for the gear G in a workpiece W, and attaches the gear G to the predetermined attachment position. Thus, the robot 10 attaches the gear G to the workpiece W. A configuration of the robot 10 will be described in detail later by referring to FIGs. 2 to 3B.

The work table 20 is for the robot 10 to perform work of incorporating the gears G into the workpiece W. On the work table 20, the workpiece W, the gears G to be incorporated, and any other necessary things are placed.

Here, the workpiece W according to this embodiment will be described. FIG. 1B is a schematic plan view of an example of the workpiece W, into which the gears G are incorporated. As illustrated in FIG. 1B, the workpiece W according to this embodiment is a to-be-processed material having a frame F. Inside the frame F, a motor M, a first gear G1, a second gear G2, and an intermediate gear G3 are to be incorporated.

The first gear G1 is to be coupled to the motor M, which is a driving source. Thus, the first gear G1 is restricted or prevented from turning by the motor M. The second gear G2 is another gear among the plurality of gears G, and is not to be engaged with the first gear G1. The intermediate gear G3 is another gear among the plurality of gears G, and is to mesh with the first gear G1 and the second gear G2 so as to be engaged between and with the first gear G1 and the second gear G2.

In FIG. 1B, the first gear G1 is described as a worm gear wheel to be coupled to the motor M. The first gear G1, however, will not be limited to the configuration to be coupled to the motor M. Additionally, the first gear G1 may be coupled to a reducer, for example, instead of a driving source such as the motor M.

In incorporating the gears G into the workpiece W, the gear incorporation system 1 according to this embodiment has its robot 10 give priority to the first gear G1 and the second gear G2, which are not to be engaged with each other, and attach the first gear G1 and the second gear G2 to respective predetermined attachment positions in the workpiece W. After attaching the first gear G1 and the second gear G2 to respective predetermined attachment positions in the workpiece W, the robot 10 temporarily places the intermediate gear G3 on a predetermined attachment position for the intermediate gear G3 in the workpiece W.

Then, considering that the second gear G2 is not restricted or prevented from turning, the robot 10 turns the second gear G2 by a slight amount so as to engage the intermediate gear G3 between and with the first gear G1 and the second gear G2.

Here, a determination is made as to whether the intermediate gear G3 is engaged between and with the first gear G1 and the second gear G2, and the determination is based on a change in an external force acting on the robot 10. The robot 10 includes a force sensor 12 (described later), and it is the force sensor 12 that detects a change in the external force.

This enables the gear incorporation system 1 according to this embodiment to engage as many gears G as the gears G could be without using a camera or a similar device that can make the processing time-consuming and complicated. This, in other words, ensures efficiency and readiness of engagement of the gears G.

An exemplary configuration of the gear incorporation system 1 according to this embodiment will be described in detail below by referring to a case where the gears G are to be incorporated into the workpiece W illustrated in FIG. 1B. In the following description, the second gear G2 illustrated in FIG. 1B is the gear G to be turned by a slight amount.

First, a configuration of the robot 10 will be described in detail by referring to FIG. 2. FIG. 2 is a schematic perspective view of an exemplary configuration of the robot 10.

As illustrated in FIG. 2, an example of the robot 10 is a vertical multi-articular robot having a single arm. Specifically, the robot 10 includes a wrist 10a, an upper arm 10b, a lower arm 10c, a rotation base 10d, a base 10e, and a support column 10f.

The side of the surface on which the support column 10f of the robot 10 is installed will be referred to as "base end side". A portion of each of the components of the robot 10 on and around the base end side of each component will be referred to as "base end portion". The wrist 10a side of the robot 10 will be referred to as "distal end side". A portion of each of the components of the robot 10 on and around the distal end side of each component will be referred to as "distal end portion".

The wrist 10a is supported by the upper arm 10b at the base end portion of the wrist 10a. The upper arm 10b, at its base end portion, is supported by the lower arm 10c, and supports the wrist 10a at the distal end portion of the upper arm 10b.

The lower arm 10c, at its base end portion, is supported by the rotation base 10d, and supports the upper arm 10b at the distal end portion of the lower arm 10c. The rotation base 10d, at its base end portion, is supported by the base 10e, and supports the lower arm 10c at the distal end portion of the rotation base 10.

The base 10e, at its base end portion, is supported by the support column 10f, which is secured on a surface such as the floor of the cell 2 (see FIG. 1A). The base 10e, at its distal end portion, supports the rotation base 10d.

The robot 10 has joints (not illustrated) where adjacent components ranging from the wrist 10a to the base 10e are coupled to each other. The joints contain respective actuators such as servo motors. By driving the actuators, the robot 10 performs a variety of multi-axis movements.

Specifically, the actuator in the joint coupling the wrist 10a and the upper arm 10b to each other rotates the wrist 10a about an axis B. The actuator in the joint coupling the upper arm 10b and the lower arm 10c to each other rotates the upper arm 10b about an axis U.

The actuator in the joint coupling the lower arm 10c and the rotation base 10d to each other rotates the lower arm 10c about an axis L.

The actuator in the joint coupling the rotation base 10d and the base 10e to each other rotates the rotation base 10d about an axis S.

The robot 10 further includes an actuator to rotate the distal end portion of the wrist 10a about an axis T, and an actuator to rotate the upper arm 10b about an axis R.

Thus, the robot 10 includes six axes S, L, U, R, B, and T. Based on an operation instruction from the control apparatus 30, the robot 10 performs a variety of multi-axis movements using a combination of the six axes. An example of the operation instruction output from the control apparatus 30 includes pulse signals respectively to bring the above-described actuators into operation.

A hand 11 (described later) is mounted to the distal end portion of the wrist 10a. The hand 11 will be described below.

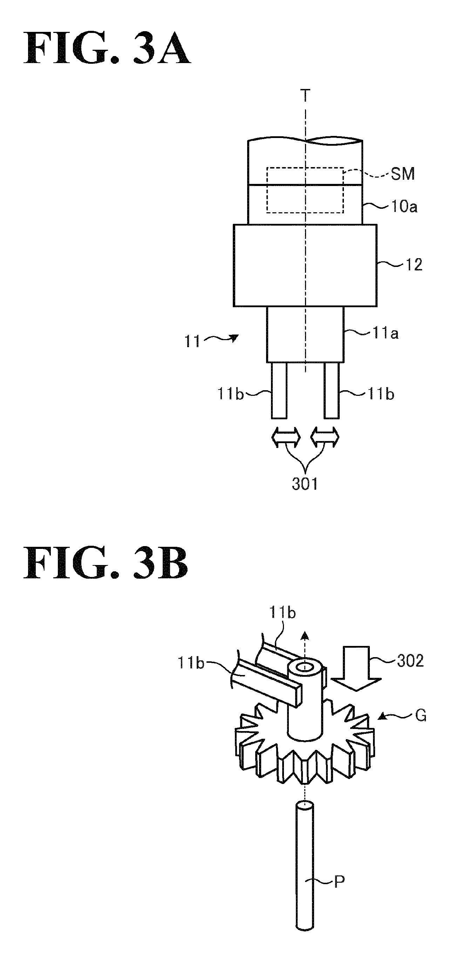

FIG. 3A is a schematic view of an exemplary configuration of the hand 11. FIG. 3B schematically illustrates an example of how the robot 10 attaches the gear G.

As illustrated in FIG. 3A, the hand 11 includes a base 11a and a holder 11b. As described above, the hand 11 is mounted to the distal end portion of the wrist 10a. This enables the hand 11 to rotate about the axis T by a servo motor SM, which is an actuator in the wrist 10a, together with the distal end portion of the wrist 10a.

The base 11a is a base member of the hand 11, and includes an opening and closing mechanism to open and close the holder 11b. The holder 11b is in the form of a pair of claws that are openable and closable by approaching each other and moving apart from each other (as indicated by the double-headed arrows 301 in 3A) using the opening and closing mechanism.

The holder 11b is capable of sandwiching a targeted object (which is the gear G in this embodiment) between the pair of claws so as to hold the targeted object. The holder 11b is also capable of pressing the targeted object on, for example, the distal end of the holder 11b.

The hand 11 includes the force sensor 12. The force sensor 12 is an inner force sensor to detect an external force acting on the hand 11. As illustrated in FIG. 3A, the exemplary force sensor 12 is disposed between the wrist 10a and the hand 11. The force sensor 12 may be a six-axis sensor, which is capable of measuring force applied from three-dimensional directions and force applied in directions torsional to the three-dimensional directions.

Based on the operation instruction from the control apparatus 30, the robot 10 uses the hand 11 to hold the gear G, moves the gear G to a predetermined attachment position for the gear G, and attaches the gear G to the predetermined attachment position.

Specifically, referring to the example illustrated in FIG. 3B, the robot 10 uses the holder 11b to hold the hollow protrusion at the center of the gear G, and moves the gear G to the predetermined attachment position for the gear G. Here, an upright shaft pin P is disposed at the predetermined attachment position. The robot 10 moves the gear G to guide the shaft pin P through the protrusion of the gear G (as indicated by the arrow 302 in FIG. 3B), thereby attaching the gear G to the predetermined attachment position.

Next, a configuration of the gear incorporation system 1 according to this embodiment will be described by referring to FIGs. 4A and 4B. FIG. 4A is a block diagram of the gear incorporation system 1 according to this embodiment. FIG. 4B is a block diagram of a configuration of an instructor 31a.

It is noted that FIGs. 4A and 4B illustrate those components necessary for description of the gear incorporation system 1, omitting those components of general nature.

The following description by referring to FIGs. 4A and 4B will mainly focus on the internal configuration of the control apparatus 30, and may occasionally simplify or omit the components that have been already described.

As illustrated in FIG. 4A, the control apparatus 30 includes a controller 31 and a storage 32. The controller 31 includes the instructor 31a, an inner-force information acquirer 31b, and a determiner 31c.

The storage 32 is a storage device such as a hard disc drive and a nonvolatile memory, and stores gear combination information 32a and teaching information 32b.

It is noted that not all the components of the control apparatus 30 illustrated in FIG. 4A may necessarily be disposed in the control apparatus 30. A possible example is that the gear combination information 32a and the teaching information 32b, which are stored in the storage 32, are stored in an internal memory of the robot 10. Another possible example is that the gear combination information 32a and the teaching information 32b are stored in an upper-level device upper than the control apparatus 30, and acquired by the control apparatus 30 from the upper-level device when necessary.

The controller 31 is in charge of overall control of the control apparatus 30. Based on the gear combination information 32a and the teaching information 32b registered in advance, the instructor 31a generates operation signals to operate the robot 10, which includes the arms 10a to 10d, the hand 11, and the force sensor 12. Then, the instructor 31a outputs the operation signals to the robot 10. The arms 10a to 10d respectively correspond to the wrist 10a, the upper arm 10b, the lower arm 10c, and the rotation base 10d.

The gear combination information 32a is information indicating a combination of the gears G. Examples of such information include, but are not limited to, information indicating attachment positions of the gears G1 to G3, information indicating positional relationships among the gears G1 to G3, information indicating the diameters of the gears G1 to G3, and information indicating the gear ratio among the gears G1 to G3. The teaching information 32b also includes a "job". The "job" is a particular program to bring the robot 10 into operation.

In generating the above-described operation signals, the instructor 31a selects a motion form of the robot 10 based on the gear combination information 32a, the teaching information 32b, and a determination, described later, forwarded from the determiner 31c.

The operation signals are generated in the form of, for example, pulse signals intended for the servo motors, which are the actuators in the joints of the robot 10 (such as the servo motor SM).

A configuration of the instructor 31a will be described in more detail. As illustrated in FIG. 4B, the instructor 31a includes an analyzer 31aa, a gear combination determiner 31ab, a temporary placer 31ac, a turner 31ad, a presser 31ae, and an operation signal generator 31af.

The analyzer 31aa reads the teaching information 32b and analyzes the "job" to generate commands respectively corresponding to the temporary placer 31ac, the turner 31ad, and the presser 31ae. Then, the analyzer 31aa forwards the commands respectively to the temporary placer 31ac, the turner 31ad and the presser 31ae.

Based on the gear combination information 32a, the gear combination determiner 31ab determines whether the gears G include the intermediate gear G3, which is to be engaged between and with the first gear G1 and the second gear G2, which are not to be engaged with each other. When the gear combination determiner 31ab determines that the gears G include the intermediate gear G3, the gear combination determiner 31ab instructs the temporary placer 31ac to control the robot 10 to temporarily place the intermediate gear G3 on the predetermined attachment position.

The gear incorporation system 1 may perform a gear incorporation operation specific to a case where the intermediate gear G3 exists. In this case, the gear combination determiner 31ab need not refer to the gear combination information 32a but may routinely instruct the temporary placer 31ac to control the robot 10 to temporarily place the intermediate gear G3 on the predetermined attachment position.

Based on the command forwarded from the analyzer 31aa and based on the instruction from the gear combination determiner 31ab, the temporary placer 31ac instructs the operation signal generator 31af to generate an operation signal for controlling the robot 10 to temporarily place the intermediate gear G3 on the predetermined attachment position.

Specifically, after the temporary placer 31ac has controlled the robot 10 to give priority to the first gear G1 and the second gear G2 and attach the first gear G1 and the second gear G2 to the respective attachment positions, the temporary placer 31ac controls the operation signal generator 31af to generate the operation signal for controlling the robot 10 to temporarily place the intermediate gear G3 on the predetermined attachment position.

The temporary placer 31ac also instructs the turner 31ad to control the robot 10 to turn the second gear G2 by a slight amount.

Based on the command forwarded from the analyzer 31aa and based on the instruction from the temporary placer 31ac, the turner 31ad instructs the operation signal generator 31af to generate the operation signal for controlling the robot 10 to turn the second gear G2 by a slight amount.

Specifically, after the intermediate gear G3 has been temporarily placed on the predetermined attachment position, the turner 31ad controls the operation signal generator 31af to generate the operation signal for controlling the robot 10 to turn the second gear G2 by a slight amount.

When the turner 31ad receives from the determiner 31c, described later, a determination indicating that the intermediate gear G3 is not engaged between and with the first gear G1 and the second gear G2 or that the engagement is not proper even though the determiner 31c has determined that the intermediate gear G3 is engaged between and with the first gear G1 and the second gear G2, the turner 31ad anew controls the robot 10 to turn the second gear G2 by a slight amount. An example of the slight amount is a least possible amount by which the robot 10 turns the first gear G1 to bring the second gear G2, through friction, into engagement with the intermediate gear G3, and to bring the first gear G1 into engagement with the intermediate gear G3. Another example of the slight amount is a least possible amount by which the robot 10 turns the first gear G1 or the second gear G2 to bring the intermediate gear G3 into proper engagement between and with the first gear G1 and the second gear G2.

Based on the command forwarded from the analyzer 31aa and based on the determination from the determiner 31c, the presser 31ae instructs the operation signal generator 31af to generate an operation signal for controlling the robot 10 to press the intermediate gear G3.

Specifically, when the determiner 31c determines that the intermediate gear G3 is engaged between and with the first gear G1 and the second gear G2, the presser 31ae controls the operation signal generator 31af to generate the operation signal for controlling the robot 10 to press the intermediate gear G3 in a rotation axis direction.

Based on the instructions from the temporary placer 31ac, the turner 31ad, and the presser 31 ae, the operation signal generator 31af generates the operation signals for bringing the robot 10 into operation and outputs the operation signals to the robot 10.

When the gear combination determiner 31ab determines that the gears G do not include the intermediate gear G3, the instructor 31a controls the operation signal generator 31af to generate an operation signal for controlling the robot 10 to directly engage the first gear G1 and the second gear G2 with each other.

Referring back to FIG. 4A, the inner-force information acquirer 31b will be described. The force sensor 12 detects the external force acting on the hand 11, and the inner-force information acquirer 31b acquires a notification of the detected external force and forwards the notification of the detected external force to the determiner 31c.

Based on the notification of the detected external force forwarded from the inner-force information acquirer 31b, the determiner 31c determines whether the intermediate gear G3 is engaged between and with the first gear G1 and the second gear G2. When the intermediate gear G3 is engaged between and with the first gear G1 and the second gear G2, the determiner 31c determines whether the intermediate gear G3 is properly engaged between and with the first gear G1 and the second gear G2.

Specifically, based on a change in the external force acting on the robot 10 while the turner 31ad is controlling the robot 10 to turn the second gear G2 by a slight amount, the determiner 31c determines whether the intermediate gear G3 is engaged between and with the first gear G1 and the second gear G2.

In this embodiment, while the intermediate gear G3 is engaged between and with the first gear G1 and the second gear G2 with the intermediate gear G3 meshed with the first gear G1 and the second gear G2, the motor M restricts or prevents the turning of the first gear G1. Here, the detected external force in the notification that the inner-force information acquirer 31b acquires is highly changeable.

When, for example, the degree of change in the detected external force is in excess of a predetermined threshold, the determiner 31c determines that the intermediate gear G3 is engaged between and with the first gear G1 and the second gear G2.

Based on the external force acting on the robot 10 while the presser 31ae is controlling the robot 10 to press the intermediate gear G3, the determiner 31c determines whether the intermediate gear G3 is properly engaged between and with the first gear G1 and the second gear G2.

Specifically, the determiner 31c determines whether the external force involved in the pressing of the intermediate gear G3 exceeds, for example, a predetermined threshold. In this manner, the determiner 31c identifies an engagement failure such as lifting or rattling even though the determiner 31c has determined that the intermediate gear G3 is engaged between and with the first gear G1 and the second gear G2.

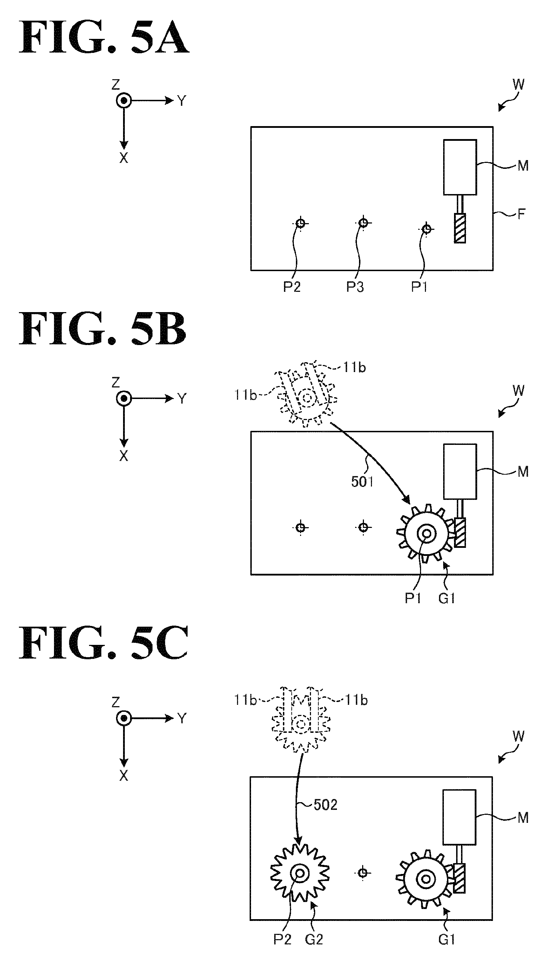

Next, by referring to FIGs. 5A to 5I, description will be made with regard to a procedure for the incorporation operation of the gears G performed by the gear incorporation system 1. FIGs. 5A to 5I are diagrams schematically illustrating first to ninth aspects of the procedure for the incorporation operation of the gears G. The incorporation operation is controlled by the control apparatus 30, described above.

First, FIG. 5A illustrates a workpiece W in which no gears G are incorporated. It will be assumed that the motor M has been already incorporated within the frame F of the workpiece W as illustrated in FIG. 5A since before the gears G are incorporated into the workpiece W. It also will be assumed that a shaft pin P1 is installed in advance at the attachment position for the first gear G1, a shaft pin P2 is installed in advance at the attachment position for the second gear G2, and the shaft pin P3 is installed in advance at the attachment position for the intermediate gear G3.

In the operation of incorporating the gears G in the workpiece W, the temporary placer 31ac first controls the robot 10 to give priority to the first gear G1 and the second gear G2 and attach the first gear G1 and the second gear G2 to the respective attachment positions, and then controls the robot 10 to temporarily place the intermediate gear G3 on its attachment position.

Specifically, as illustrated in FIG. 5B, the temporary placer 31ac first controls the robot 10 to hold the first gear G1 using the holder 11b, move the first gear G1 to the position of the shaft pin P1, and attach the first gear G1 to the shaft pin P1 (as indicated by the arrow 501 in FIG. 5B) while joining the first gear G1 to the motor M.

Next, as illustrated in FIG. 5C, the temporary placer 31ac controls the robot 10 to hold the second gear G2 using the holder 11b, move the second gear G2 to the position of the shaft pin P2, and attach the second gear G2 to the shaft pin P2 (as indicated by the arrow 502 in FIG. 5C).

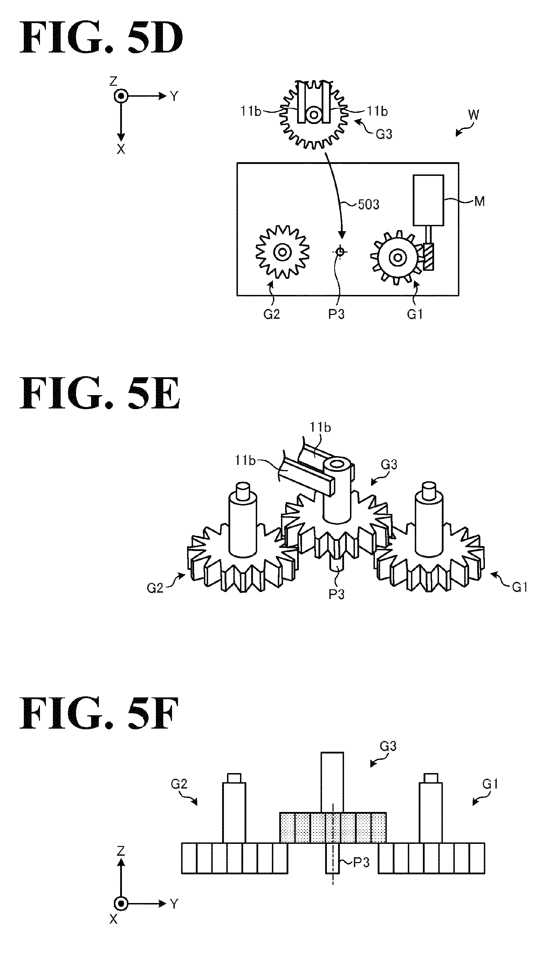

Then, as illustrated in FIG. 5D, the temporary placer 31ac controls the robot 10 to hold the intermediate gear G3 using the holder 11b and move the intermediate gear G3 to the position of the shaft pin P3 (as indicated by the arrow 503 in FIG. 5D).

Then, as illustrated in FIG. 5E, the temporary placer 31ac controls the robot 10 to temporarily place the intermediate gear G3 between the first gear G1 and the second gear G2. The terms "to temporarily place", "temporary placement", and "temporarily placing" refer to temporarily placing the intermediate gear G3 above the first gear G1 and the second gear G2 with the shaft pin P3 passed through the intermediate gear G3 and without the intermediate gear G3 meshed with the first gear G1 nor the second gear G2, as illustrated in FIG. 5F.

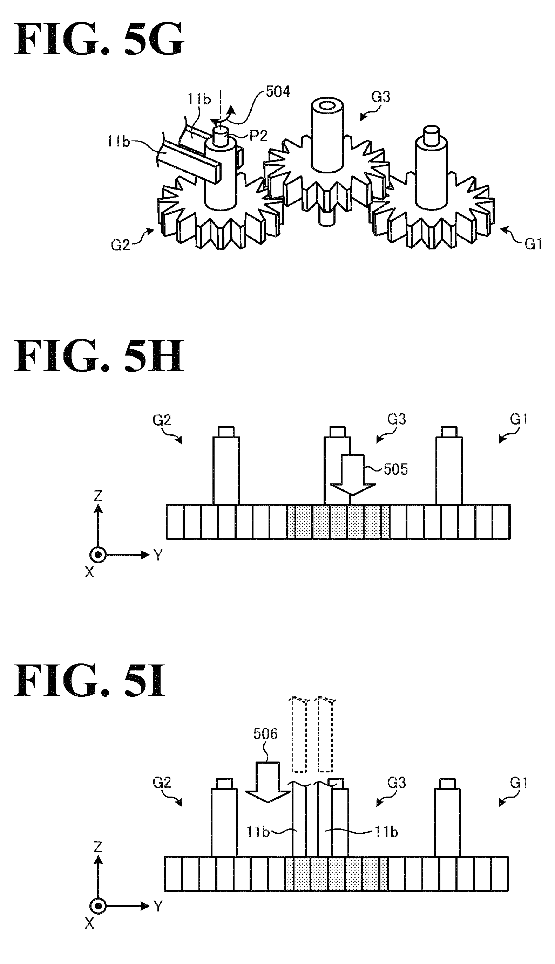

For ease of description, the intermediate gear G3 illustrated in FIG. 5F is partially dotted. Similarly, the intermediate gear G3 illustrated in FIGs. 5H and 5I, described later, is partially dotted.

With the intermediate gear G3 temporarily placed in the above-described manner, the turner 31ad controls the robot 10 to turn the second gear G2 by a slight amount. Specifically, as illustrated in FIG. 5G, with the robot 10 holding the second gear G2 using the holder 11b, the turner 31ad controls the robot 10 to turn the second gear G2 by a slight amount about the shaft pin P2 (as indicated by the double-headed arrow 504 in FIG. 5G).

In this manner, the relative positions of the second gear G2 and the intermediate gear G3 are shifted, which causes the intermediate gear G3 to fall between the first gear G1 and the second gear G2 under the weight of the intermediate gear G3 itself as illustrated in FIG. 5H (which is indicated by the arrow 505 in FIG. 5H). Thus, the intermediate gear G3 is engaged with the first gear G1 and the second gear G2.

Preferably, the turner 31ad may cause a swing movement of the second gear G2 in a circumferential direction of the second gear G2 while turning the second gear G2 by a slight amount. This provides an added advantage of facilitating the movement of the intermediate gear G3, which is now temporarily placed and in a free state. This, in turn, facilitates the shift between the relative positions of the second gear G2 and the intermediate gear G3. As a result, the intermediate gear G3 is more readily engaged with the first gear G1 and the second gear G2.

As described above, the determiner 31c determines, based on the notification of the external force detected by the force sensor 12, whether the intermediate gear G3 is engaged with the first gear G1 and the second gear G2 while being meshed with the first gear G1 and the second gear G2.

Next, as illustrated in FIG. 5I, the presser 31ae controls the robot 10 to press the intermediate gear G3 using the holder 11b in the rotation axis direction of the intermediate gear G3 (as indicated by the arrow 506 in FIG. 5I).

This ensures reliable pressing of the intermediate gear G3 into between the first gear G1 and the second gear G2 in order to engage the intermediate gear G3 between and with the first gear G1 and the second gear G2. Additionally, the determiner 31c uses the notification from the force sensor 12 at the time of the pressing to determine whether the intermediate gear G3 is properly engaged between and with the first gear G1 and the second gear G2.

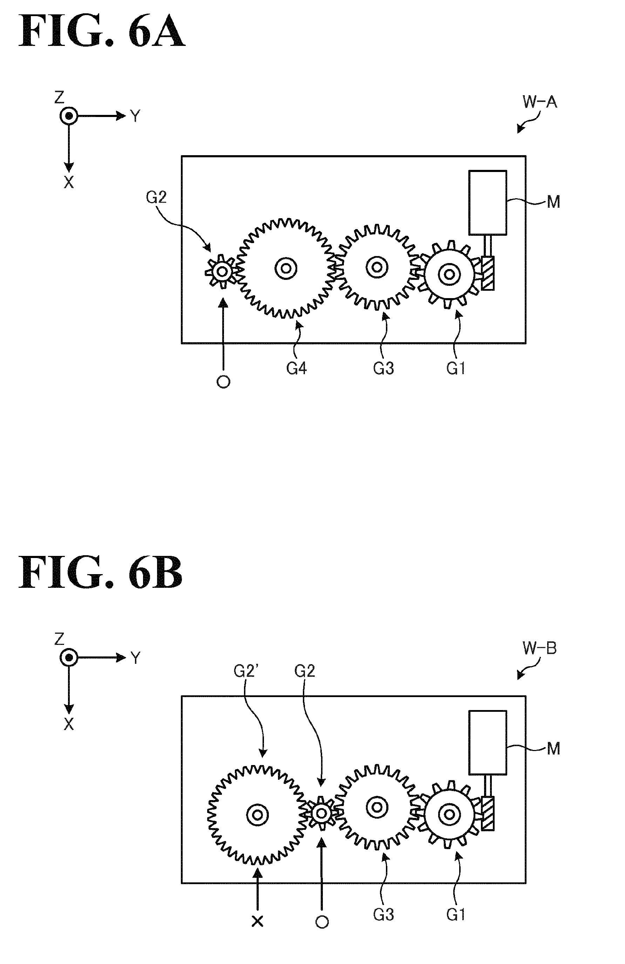

While in this embodiment three gears G are incorporated into the workpiece W, the method for incorporating the gears according to this embodiment is also applicable to incorporation of four or more gears G into the workpiece W. Such examples will be described in a first modification and a second modification by respectively referring to FIGs. 6A and 6B.

FIG. 6A is a diagram schematically illustrating the first modification, and FIG. 6B is a diagram schematically illustrating the second modification. Both in the first modification and the second modification, four gears G are incorporated into the workpiece.

FIG. 6A illustrates a workpiece W-A, in which four gears G are incorporated. The four gears G are attached basically in a manner similar to the above-described manner. Specifically, the two gears G on both end sides in the workpiece W-A are regarded as a first gear G1 and a second gear G2, and the first gear G1 and the second gear G2 are given priority to be attached in the workpiece W-A.

The other two gears G that are between the first gear G1 and the second gear G2 are regarded as intermediate gears G3 and G4. The intermediate gears G3 and G4 are temporarily placed in the workpiece W-A, and the second gear G2 is regarded as a gear to be turned by a slight amount by the turner 31ad (the symbol "○" in FIG. 6A indicates the second gear G2).

This ensures that as many gears G as the gears G could be are readily engaged with each other in a shorter time.

FIG. 6B illustrates a workpiece W-B, in which a gear G2' is farthest from the first gear G1 and has a gear ratio larger than the gear ratios of the gears G to be engaged with the gear G2'. In this case, it is preferable to exclude the gear G2' from candidate gears that the turner 31ad is to turn by a slight amount (see "×" indicating the gear G2' in FIG. 6B).

If the gear G2' is turned by a slight amount, which may not be slight for the gears G of smaller gear ratios, the gears G may be increased in speed and turned in larger amounts. This makes the gear G3 difficult to engage with the other gears G when the gears G are engaged in the order: the gear G2', the gear G2, and the gear G3.

In view of this, the gear G (which is indicated as "○" in FIG. 6B) engaged with the gear G2' may serve as the second gear G2 that the turner 31ad is to turn by a slight amount.

Specifically, the first gear G1 and the second gear G2 may be given priority and attached to respective attachment positions, and then the intermediate gear G3 may be temporarily placed on the predetermined attachment position. Then, the second gear G2 may be turned by a slight amount using the turner 31ad.

Thus, the first gear G1 and the second gear G2 are engaged with the intermediate gear G3. After the first gear G1 and the second gear G2 are engaged with the intermediate gear G3 in the above-described manner, the robot 10 may hold the gear G2' using the holder 11b and attach the gear G2' to its attachment position while engaging the gear G2' with the second gear G2.

Similarly to the first modification of the embodiment, the second modification ensures that the intermediate gear G3 is readily attached to the predetermined attachment position through the turning of the second gear G2 by a slight amount. Thus, the gears G are readily incorporated into the workpiece W-B in a shorter time.

Thus, in the gear incorporation system 1 according to this embodiment, the turner 31ad selects the gear G to turn by a slight amount based on the gear ratios of the first gear G1, the second gear G2, and the intermediate gear G3 (or G4).

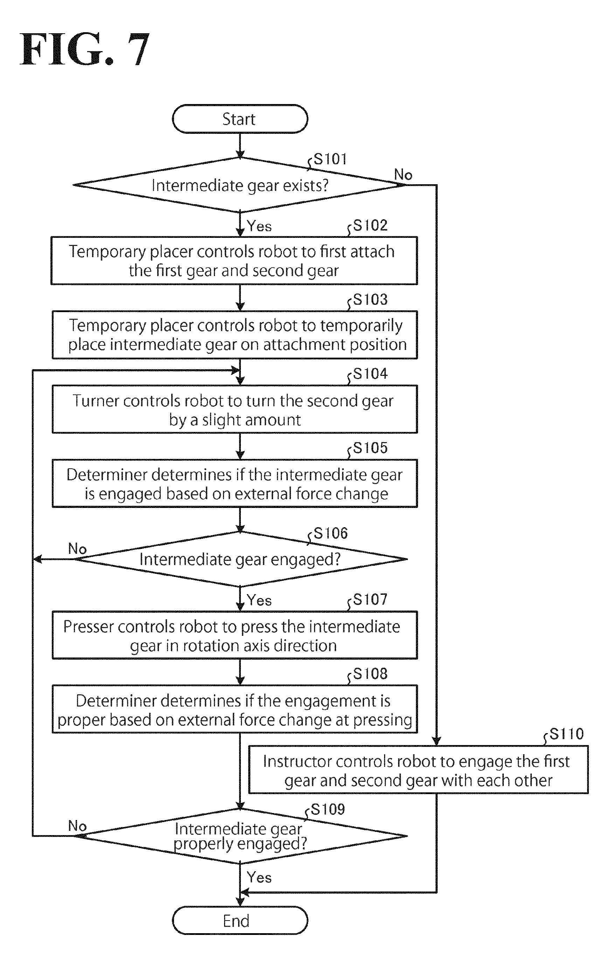

Next, by referring to FIG. 7, a procedure for processing performed by the gear incorporation system 1 according to this embodiment will be described. FIG. 7 is a flowchart of the procedure for the processing performed by the gear incorporation system 1 according to this embodiment.

As illustrated in FIG. 7, first, the gear combination determiner 31ab determines whether the gears G include the intermediate gear G3 (step S101). When the gear combination determiner 31ab determines that the gears G include the intermediate gear G3 (Yes at step S101), the temporary placer 31ac controls the robot 10 to give priority to the first gear G1 and the second gear G2 and attach the first gear G1 and the second gear G2 to respective attachment positions (step S102).

Next, the temporary placer 31ac controls the robot 10 to temporarily place the intermediate gear G3 on a predetermined attachment position for the intermediate gear G3 (step S103).

Then, the turner 31ad controls the robot 10 to turn the second gear G2 by a slight amount (step S104). Then, based on a change in external force acting on the robot 10 while the robot 10 is turning the second gear G2 by the slight amount, the determiner 31c determines whether the intermediate gear G3 is engaged between and with the first gear G1 and the second gear G2 (step S105).

When the determiner 31c determines to provide such a presumption that the intermediate gear G3 is engaged between and with the first gear G1 and the second gear G2 (Yes at step S106), the presser 31ae controls the robot 10 to press the intermediate gear G3 in a rotation axis direction (step S107). When the external force shows no change to invoke the presumption that the intermediate gear G3 is engaged between and with the first gear G1 and the second gear G2 (No at step S106), the processings at and later than step S104 are repeated.

The determiner 31c determines whether the intermediate gear G3 is properly engaged between and with the first gear G1 and the second gear G2 based on the change in the external force involved in the pressing of the intermediate gear G3 at step S107 (step S108).

When the determiner 31c determines that the intermediate gear G3 is properly engaged between and with the first gear G1 and the second gear G2 (Yes at step S109), the processing ends. When the condition for the affirmative determination at step S109 is not met (No at step S109), the processings at and later than step S104 are repeated.

When the condition for the affirmative determination at step S101 is not met (No at step S101), the instructor 31a controls the robot 10 to engage the first gear G1 and the second gear G2 with each other (step S110), and then the processing ends.

While in this embodiment the first gear G1 is restricted or prevented from turning by the motor M, this should not be construed in a limiting sense. One or both of the first gear G1 and the second gear G2, which are not to be engaged with each other, may not necessarily be restricted or prevented from turning.

That is, the first gear G1 and the second gear G2 may be attached to respective attachment positions in a free state. Even though the force sensor 12 acquires less of the change in external force than, for example, when the first gear G1 is restricted or prevented from turning, this may be addressed by using a suitable threshold for the determination as to whether the intermediate gear G3 is properly engaged between and with the first gear G1 and the second gear G2.

In this case, whichever gear G, the first gear G1 or the second gear G2, may be turned by a slight amount. Alternatively, both the first gear G1 and the second gear G2 may be turned by a slight amount. Thus, at least one gear G among the first gear G1 and the second gear G2 may be turned by a slight amount.

As has been described hereinbefore, the gear incorporation system according to this embodiment includes the robot and the control apparatus. The robot holds a gear, moves the gear to a predetermined attachment position for the gear, and attaches the gear to the predetermined attachment position. The control apparatus controls the robot to operate.

The control apparatus includes the determiner, the temporary placer, and the turner. The determiner determines whether at least one intermediate gear is to be engaged between and with a first gear and a second gear that are not to be engaged with each other.

When the determiner determines that at least one intermediate gear is to be engaged between and with the first gear and the second gear, the temporary placer controls the robot to give priority to the first gear and the second gear to attach the first gear and the second gear to respective attachment positions, then controls the robot to temporarily place the intermediate gear on the predetermined attachment position for the intermediate gear.

After the robot has temporarily placed the intermediate gear on the predetermined attachment position, the turner controls the robot to turn at least one gear among the first gear and the second gear by a slight amount.

Thus, the gear incorporation system according to this embodiment ensures efficiency and readiness of gear engagement.

### (Other Embodiments)

In the above-described embodiment, the change in the external force is acquired in the form of a value measured by the force sensor. The force sensor, however, should not be construed in a limiting sense. Another possible example is that the change in the external force is acquired in the form of a torque command value fed back from the servo motor in any of the joints of the robot.

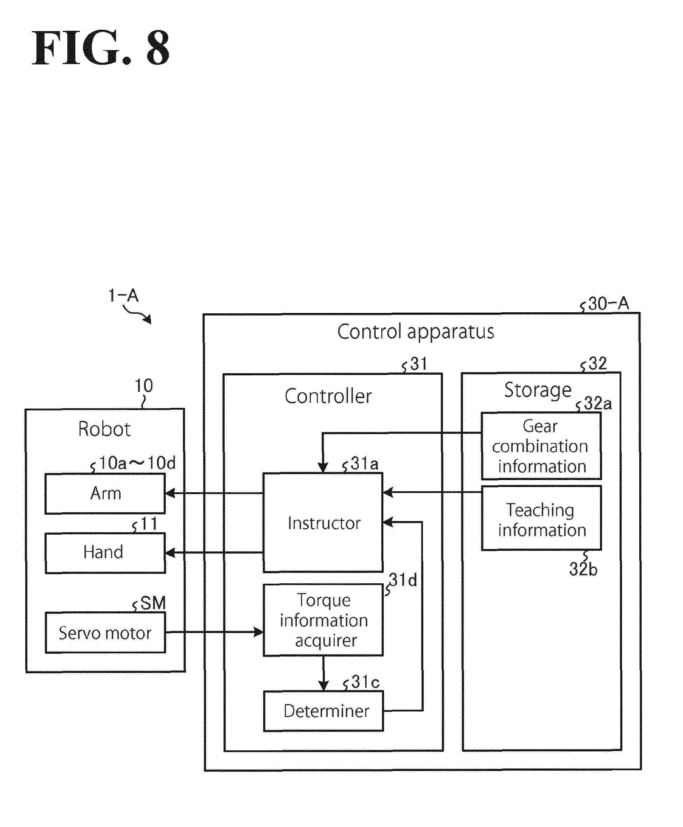

The another possible example is illustrated in FIG. 8. FIG. 8 is a block diagram of a gear incorporation system 1-A according to another embodiment. FIG. 8 corresponds to FIG. 4A, and the following description will be mainly regarding those respects in which the gear incorporation system 1-A is different from the gear incorporation system 1 according to the above-described embodiment.

As illustrated in FIG. 8, the gear incorporation system 1-A includes a control apparatus 30-A. The control apparatus 30-A includes a torque information acquirer 31d, which is a difference from the inner-force information acquirer 31b (see FIG. 4A) of the gear incorporation system 1.

The torque information acquirer 31d acquires a torque command value fed back from, for example, the servo motor SM (see FIG. 3A), and forwards the torque command value to the determiner 31c. Based on the torque command value from the torque information acquirer 31d, the determiner 31c determines whether the intermediate gear G3 is engaged between and with the first gear G1 and the second gear G2, or determines whether the engagement is proper, even though the determiner 31c has determined that the intermediate gear G3 is engaged between and with the first gear G1 and the second gear G2.

It should be noted that the torque command value that the torque information acquirer 31d acquires will not be limited to the torque command value from the servo motor SM. The torque command value may be from any other servo motors in the joints of the robot 10.

The gear incorporation system 1-A according to the another embodiment ensures efficiency and readiness of gear engagement. Additionally, the gear incorporation system 1-A eliminates the need for the force sensor 12 (see FIG. 4A) and thus contributes to cost reductions.

In the above-described embodiments, the gear combination determiner has been described as determining a combination of the gears based on the gear combination information. It is possible to measure differences in the ratios of the gears based on the extent to which the pair of claws of the holder of the robot separate from each other when the pair of claws hold each of the gears. Then, by referring to the measured gear ratios, the turner may select which gear to turn by a slight amount.

In the above-described embodiments, the robot has been described as having a single arm with six axes. This, however, should not be construed as limiting the number of axes nor the number of arms. Other possible examples include, but are not limited to, a seven-axis robot and a two-arm robot.

The above-described control apparatus may be a computer, for example. In this case, the controller may be a CPU (Central Processing Unit), and the storage may be a memory. The functions of the controller may be implemented by loading programs made in advance to the controller. Alternatively, the functions of the controller may be entirely or partially implemented in the form of hardware of wired logic.

Obviously, numerous modifications and variations of the present disclosure are possible in light of the above teachings. It is therefore to be understood that within the scope of the appended claims, the present disclosure may be practiced otherwise than as specifically described herein.
- 1, 1-A: Gear incorporation system
- 2: Cell
- 10: Robot
- 10a: Wrist (arm)
- 10b: Upper arm (arm)
- 10c: Lower arm (arm)
- 10d: Rotation base (arm)
- 10e: Base
- 10f: Support column
- 11: Hand
- 11a: Base
- 11b: Holder
- 12: Force sensor
- 20: Work table
- 30, 30-A: Control apparatus
- 31: Controller
- 31a: Instructor
- 31aa: Analyzer
- 31ab: Gear combination determiner (determiner)
- 31ac: Temporary placer
- 31ad: Turner
- 31ae: Presser
- 31af: Operation signal generator
- 31b: Inner-force information acquirer
- 31c: Determiner
- 31d: Torque information acquirer
- 32: Storage
- 32a: Gear combination information
- 32b: Teaching information
- B: Axis
- F: Frame
- G: Gear
- G1: First gear (gear)
- G2: Second gear (gear)
- G2': Gear
- G3: Intermediate gear (gear)
- G4: Intermediate gear
- L: Axis
- M: Motor
- P, P1 to P3: Shaft pin
- R: Axis
- S: Axis
- SM: Servo motor
- T: Axis
- U: Axis
- W, W-A, W-B: Workpiece

## Claims

1. A gear incorporation system (1, 1-A), **characterized by**:
a robot (10) configured to hold a gear from among a plurality of gears comprising a first gear and a second gear that are not to be engaged with each other, the robot (10) being configured to move the gear to a predetermined attachment position for the gear and attach the gear to the predetermined attachment position; and
a control apparatus (30, 30-A) configured to control the robot (10), the control apparatus (30, 30-A) comprising:
a first determiner (31ab) configured to determine whether the plurality of gears comprise an intermediate gear that is to be engaged between and with the first gear and the second gear;
a temporary placer (31ac) configured to, when the first determiner (31ab) determines that the plurality of gears comprise the intermediate gear, control the robot (10) to give priority to the first gear and the second gear to attach the first gear and the second gear to respective predetermined attachment positions, and configured to control the robot (10) to temporarily place the intermediate gear on the predetermined attachment position after attaching the first gear and the second gear to the respective predetermined attachment positions; and
a turner (31ad) configured to, after the robot (10) has temporarily placed the intermediate gear on the predetermined attachment position, control the robot (10) to turn at least one gear among the first gear and the second gear by a slight amount.

2. The gear incorporation system (1, 1-A) according to claim 1, further comprising a second determiner (31c) configured to determine whether the intermediate gear is engaged between and with the first gear and the second gear based on a change in an external force acting on the robot (10) while the robot (10) is turning the at least one gear by a slight amount.

3. The gear incorporation system (1, 1-A) according to claim 2,
wherein the robot (10) comprises
an end effector (11) configured to hold the gear, and
a force sensor (12) configured to measure a value of the external force
acting on the end effector (11), and
wherein the second determiner (31c) is configured to acquire the change in the external force based on the value of the external force measured by the force sensor (12).

4. The gear incorporation system (1, 1-A) according to claim 2,
wherein the robot (10) comprises
an end effector (11) configured to hold the gear, and
a servo motor (SM) configured to rotate the end effector (11), and
wherein the second determiner (31c) is configured to acquire the change in the external force based on a value of a torque command from the servo motor (SM).

5. The gear incorporation system (1, 1-A) according to any one of claims 2 to 4,
wherein at least one gear among the first gear and the second gear is coupled to a driving source (M) or a reducer configured to restrict or prevent the at least one gear from turning, and
wherein the turner (31ad) is configured to turn another gear among the first gear and the second gear by the slight amount, the another gear being not restricted or prevented from turning.

6. The gear incorporation system (1, 1-A) according to any one of claims 2 to 4,
wherein based on a gear ratio among the first gear, the second gear, and the intermediate gear, the turner (31ad) is configured to determine the at least one gear from among the first gear and the second gear to turn by the slight amount.

7. The gear incorporation system (1, 1-A) according to any one of claims 2 to 6,
wherein the turner (31ad) is configured to cause a swing movement of the at least one gear in a circumferential direction of the at least one gear while controlling the robot (10) to turn the at least one gear by the slight amount.

8. The gear incorporation system (1, 1-A) according to any one of claims 2 to 7, further comprising a presser (31ae) configured to, when the second determiner (31c) determines that the intermediate gear is engaged between and with the first gear and the second gear, control the robot (10) to press the intermediate gear in a rotation axis direction of the intermediate gear,
wherein based on the external force acting on the robot (10) while the presser (31ae) is controlling the robot (10) to press the intermediate gear, the second determiner (31c) is configured to determine whether the intermediate gear is properly engaged between and with the first gear and the second gear.

9. A gear incorporation method using a robot (10),
the robot (10) being controlled by a control apparatus (30, 30-A) to hold a gear from among a plurality of gears comprising a first gear and a second gear that are not to be engaged with each other, to move the gear to a predetermined attachment position for the gear, and to attach the gear to the predetermined attachment position,
the method **characterized by**:
determining whether the plurality of gears comprise an intermediate gear that is to be engaged between and with the first gear and the second gear;
when the intermediate gear is determined as included in the plurality of gears in the determining step, controlling the robot (10) to give priority to the first gear and the second gear to attach the first gear and the second gear to respective predetermined attachment positions, and controlling the robot (10) to temporarily place the intermediate gear on the predetermined attachment position after attaching the first gear and the second gear to the respective predetermined attachment positions; and
after the intermediate gear is temporarily placed on the predetermined attachment position, controlling the robot (10) to turn at least one gear among the first gear and the second gear by a slight amount.
